# FASCICULE DE BREVET EUROPEEN

(11) **EP 4 029 318 B1**
(45) Date de publication et mention de la délivrance du brevet: **29.05.2024**
(21) Numéro de dépôt: 20775383.1
(22) Date de dépôt: 25.08.2020
(51) Int. Cl.: H04M 1/72463, H04W 48/04, H04W 64/00, H04W 84/18

(54) **PROCÉDÉ DE COMMUNICATION ENTRE UN SYSTÈME DE CONTRÔLE D'UN VÉHICULE ET UN ENSEMBLE D'APPAREILS MOBILES DE TÉLÉCOMMUNICATION**
KOMMUNIKATIONSVERFAHREN ZWISCHEN EINEM FAHRZEUGSTEUERUNGSSYSTEM UND EINER VIELZAHL VON MOBILEN KOMMUNIKATIONSVORRICHTUNGEN
COMMUNICATION METHOD BETWEEN A VEHICULE CONTROL SYSTEM AND A PLURALITY OF MOBILE COMMUNICATIONS DEVICES

(30) Priorité: 13.09.2019 FR 1910124
(43) Date de publication de la demande: 20.07.2022
(73) Titulaire: Stellantis Auto SAS, 78300 Poissy (FR)
(72) Inventeur: MICHEL, Stephane, 90150 FOUSSEMAGNE (FR); HANEN, Hugo, 68520 BURNHAUPT LE BAS (FR)
(86) Numéro de dépôt international: PCT/FR2020/051496
(87) Numéro de publication internationale: WO 2021/048481

(56) Documents cités:
- US-A1- 2011 136 476
- US-A1- 2012 161 927
- US-A1- 2016 294 707

## Description

### Domaine technique de l'invention

Le domaine technique de l'invention concerne un procédé de communication entre un système de contrôle d'un véhicule et un ensemble d'appareils mobiles de télécommunication.

### Etat de la technique

Il est connu de connecter des appareils mobiles de télécommunication à un système de contrôle d'un véhicule automobile pour activer une ou plusieurs fonctions du véhicule automobile. Pour permettre l'activation de la fonction désirée, une application peut être installée sur les appareils mobiles de télécommunication, cette application étant développée pour s'interfacer avec le système de contrôle.

Cependant, la gestion des communications entre le système de contrôle et les appareils mobiles de télécommunication peut être difficile car ces appareils mobiles de télécommunication peuvent comporter chacun un système d'exploitation qui gère les connexions à sa manière entre l'appareil mobile de télécommunication concerné et le système de contrôle. Par exemple, même si l'application demande à se déconnecter du système de contrôle, le système d'exploitation peut décider de maintenir cette connexion pendant un temps prédéterminé par exemple de plus de 15 secondes. Le maintien de cette connexion est réellement problématique car cela peut empêcher la connexion d'un autre appareil mobile de télécommunication dont la connexion était attendue, par exemple à intervalles réguliers dont le pas temporel est strictement inférieur au temps prédéterminé. Cette situation peut engendrer la génération d'un faux message d'alerte par le système de contrôle du fait de la non connexion de l'appareil mobile de télécommunication dont la connexion était attendue alors que cet appareil mobile de télécommunication était bien disponible pour se connecter.

La demande de brevet européen EP1336938 décrit une solution permettant d'identifier le dernier appareil mobile connecté au véhicule. Cependant, cette solution ne permet pas au véhicule d'accepter une connexion qu'il attend si sa capacité à accepter des connexions est saturée par exemple par un appareil mobile, différent de celui dont la connexion est attendue, connecté au préalable et qui maintient sa connexion.

On connaît par le document US 20160294707 un procédé et un système de gestion de dispositifs électroniques dans un véhicule comprenant l'établissement de connexions fonctionnelles pour une communication informatique entre des dispositifs électroniques et le véhicule dans un réseau de véhicule et la communication de caractéristiques de dispositif entre chaque dispositif électronique et le véhicule.

On connaît aussi par le document US 20110136476 un système de communication qui limite sélectivement la fonctionnalité d'un ou plusieurs dispositifs de communication électroniques portables.

On connaît aussi par le document US 20120161927 un système de connexion de dispositif mobile pouvant identifier un dispositif mobile d'un conducteur actuel et donner la priorité à une connexion sans fil entre le dispositif mobile identifié et un dispositif mains libres intégré situé dans un véhicule à moteur.

### Objet de l'invention

L'invention a pour but d'améliorer la communication entre un système de contrôle d'un véhicule et un ensemble d'appareils mobiles de télécommunication, de préférence dans le but d'améliorer la disponibilité du système de contrôle à recevoir une connexion prioritaire.

A cet effet, l'invention est relative à un procédé de communication entre un système de contrôle d'un véhicule et un ensemble d'appareils mobiles de télécommunication, ledit ensemble d'appareils mobiles de télécommunication comportant un premier appareil mobile de télécommunication et au moins un deuxième appareil mobile de télécommunication, le procédé de communication comportant une étape d'émission d'un message par le système de contrôle. Ce procédé de communication est caractérisé en ce que le message indique que le système de contrôle est dans un état de suivi de position par rapport au véhicule et que cette position est celle du premier appareil mobile de télécommunication, et en ce que le procédé de communication comporte une étape de réception et de traitement du message par le deuxième appareil mobile de télécommunication d'où il résulte que le deuxième appareil mobile de télécommunication restreint sa capacité de connexion au système de contrôle ou s'interdit de se connecter au système de contrôle.

La restriction de capacité de connexion du deuxième appareil mobile de télécommunication au système de contrôle ou son interdiction de connexion au système de contrôle permet d'améliorer la disponibilité du système de contrôle à recevoir une connexion du premier appareil mobile de télécommunication qui est considérée comme prioritaire.

Le procédé de communication peut en outre comporter une ou plusieurs des caractéristiques suivantes :
- le traitement du message par le deuxième appareil mobile de télécommunication provoque la mise du deuxième appareil mobile de télécommunication dans un état tel qu'il s'interdit de se connecter au système de contrôle dans le but de lui communiquer sa position ou dans le but de seulement lui signifier sa présence, et/ou en ce que le deuxième appareil mobile de télécommunication ayant restreint sa capacité de connexion est autorisé à se connecter au système de contrôle pour envoyer au système de contrôle une ou des commandes utilisateur ;
- le traitement du message par le deuxième appareil mobile de télécommunication provoque la mise du deuxième appareil mobile de télécommunication dans un état dans lequel il s'interdit toute connexion au système de contrôle ;
- le premier appareil mobile de télécommunication se connecte au système de contrôle à plusieurs reprises, par exemple toutes les 8 secondes, pour permettre au système de contrôle d'assurer le suivi de la position du premier appareil mobile de télécommunication ;

- pour chaque connexion du premier appareil mobile de télécommunication au système de contrôle pour permettre au système de contrôle d'assurer le suivi de la position du premier appareil mobile de télécommunication, ledit premier appareil mobile de télécommunication transmet sa position par rapport au véhicule ou signifie sa présence au système de contrôle ;
- le message comporte une donnée d'identification du premier appareil mobile de télécommunication et une donnée indiquant que le système de contrôle est dans l'état de suivi de position ;
- le message émis est du type à être reçu par tous les appareils mobiles de télécommunication de l'ensemble d'appareils mobiles de télécommunication sans besoin de connexion au système de contrôle.

L'invention est aussi relative à un procédé de fonctionnement d'un véhicule comportant un système de contrôle apte à communiquer avec un ensemble d'appareils mobiles de télécommunication, ledit ensemble d'appareils mobiles de télécommunication comportant un premier appareil mobile de télécommunication et au moins un deuxième appareil mobile de télécommunication, le procédé de fonctionnement comportant une étape d'émission d'un message par le système de contrôle. Ce procédé de fonctionnement est caractérisé en ce que :
- le message indique que le système de contrôle est dans un état de suivi de position par rapport au véhicule et que cette position est celle du premier appareil mobile de télécommunication,
- le procédé de fonctionnement comporte une étape de réception et de traitement du message par le deuxième appareil mobile de télécommunication d'où il résulte que le deuxième appareil mobile de télécommunication restreint sa capacité de connexion au système de contrôle ou s'interdit de se connecter au système de contrôle,
- au préalable de l'étape d'émission du message, le procédé de fonctionnement comporte une étape d'activation d'une fonction du véhicule sur requête du premier appareil mobile de télécommunication, l'étape d'activation provoquant l'activation de l'état de suivi de position puis la mise en oeuvre de l'étape d'émission.

Selon une réalisation particulière, le procédé de fonctionnement peut être tel que :
- la fonction activée est une fonction de démarrage du véhicule,
- le premier appareil mobile de télécommunication se connecte au système de contrôle à plusieurs reprises, par exemple toutes les 8 secondes, pour permettre au système de contrôle d'assurer le suivi de la position du premier appareil mobile de télécommunication,
- le système de contrôle détecte une perte du premier appareil mobile de télécommunication causée par une absence de connexion du premier appareil mobile de télécommunication attendue par le système de contrôle pour assurer le suivi de la position du premier appareil mobile de télécommunication,
- le procédé de fonctionnement comporte une étape d'émission d'un avertissement déclenchée par la détection de la perte du premier appareil mobile de télécommunication.

L'invention est aussi relative à un véhicule, de préférence automobile, comportant un système de contrôle configuré pour :
- la mise en oeuvre du procédé de communication entre le système de contrôle et un ensemble d'appareils mobiles de télécommunication, ou
- la mise en oeuvre du procédé de fonctionnement tel que décrit.

D'autres avantages et caractéristiques pourront ressortir clairement de la description détaillée qui va suivre.

### Description sommaire des dessins

L'invention sera mieux comprise à la lecture de la description détaillée qui va suivre, donnée uniquement à titre d'exemple non limitatif et faite en se référant aux dessins annexés et listés ci-dessous.
[Fig. 1] La figure 1 représente schématiquement un véhicule et un ensemble d'appareils mobiles de télécommunication placés dans l'habitacle du véhicule.
[Fig. 2] La figure 2 représente schématiquement des étapes d'un procédé de communication entre un système de contrôle du véhicule et les appareils mobiles de télécommunication.
[Fig. 3] La figure 3 représente schématiquement des étapes d'un procédé fonctionnement du véhicule.

Dans ces figures, les mêmes références sont utilisées pour désigner les mêmes éléments.

### Description détaillée

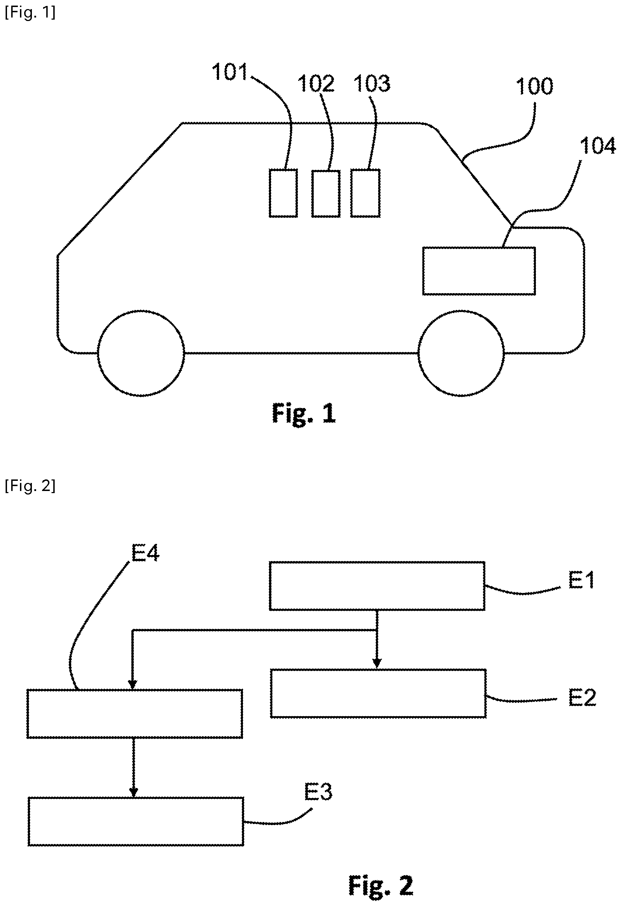

L'invention est relative à un procédé de communication entre un système 104 de contrôle d'un véhicule 100 et un ensemble d'appareils 101, 102, 103 mobiles de télécommunication tels que par exemple visibles en figure 1.

Chaque appareil 101, 102, 103 mobile de télécommunication, aussi appelé « smart device » en langue anglaise, au sens de la présente description peut être configuré pour commander l'activation d'une ou plusieurs fonctions du véhicule 100 par le système 104 de contrôle. Par exemple, chaque appareil 101, 102, 103 mobile de télécommunication peut être choisi parmi : un téléphone tel qu'un mobile multifonction, une tablette tactile, une montre connectée aussi appelée smartwatch en langue anglaise. Chaque appareil 101, 102, 103 mobile de télécommunication peut comporter un système d'exploitation sur lequel est installée une application configurée pour interagir avec le système 104 de contrôle de la manière telle que décrite dans la présente description.

Le système 104 de contrôle peut comporter les moyens nécessaires pour communiquer avec chacun des appareils 101, 102, 103 mobiles de télécommunication et pour contrôler le véhicule 100 par exemple en activant une fonction dont l'activation est commandée par l'un des appareils mobiles de télécommunication. Par exemple, le système de contrôle 102 peut comporter un processeur ou un calculateur participant à la mise en oeuvre du procédé de communication décrit dans la présente description.

Les communications entre le système 104 de contrôle et les appareils 101, 102, 103 mobiles de télécommunication se font sans-fil.

De préférence, chaque connexion ou échange de données entre un appareil 101, 102, 103 mobile de télécommunication et le système 104 de contrôle se fait selon le protocole Bluetooth, de préférence dans sa réalisation BLE (pour « Bluetooth Low Energy » en langue anglaise), par exemple dans la version 4.2 ou 5.0 de ce protocole.

Les fonctions du véhicule 100 peuvent être choisies parmi : une fonction de démarrage du véhicule 100, une fonction de verrouillage du véhicule 100 permettant par exemple de fermer les portes du véhicule 100, une fonction de déverrouillage du véhicule 100 permettant par exemple d'ouvrir les portes du véhicule 100, au moins une ou plusieurs fonctions utilisateur. Les fonctions utilisateur peut être les suivantes : une activation du klaxon du véhicule 100, une ouverture ou une fermeture séquentielle des vitres du véhicule 100, le cas échéant une ouverture ou une fermeture du coffre motorisé du véhicule 100, le cas échéant une ouverture ou une fermeture de portes latérales coulissantes motorisées du véhicule 100, une activation des clignotants du véhicule 100, une activation des projecteurs du véhicule 100. La connaissance de la position de l'un des appareils 101, 102, 103 mobiles de télécommunication peut être utilisée pour autoriser le démarrage du véhicule 100, pour afficher une notification de demande de verrouillage du véhicule 100, pour afficher une notification de demande de déverrouillage du véhicule 100.

Par la suite, il est fait référence à une situation dite problématique pour laquelle le véhicule 100 cherche, de préférence via son système de contrôle 104, à suivre la position d'un appareil mobile de télécommunication en particulier en utilisant des données associées à une connexion de cet appareil mobile de télécommunication. Cependant, il est possible que la tentative de connexion de cet appareil mobile de télécommunication échoue à cause d'un autre appareil mobile de télécommunication dont la connexion avec le système de contrôle 104 est active, d'où il résulte que le système de contrôle génère un avertissement erroné en pensant que l'appareil mobile de télécommunication dont la tentative de connexion a échoué, bien que toujours présent, est « perdu » car il ne s'est pas connecté.

Par exemple, la position de l'appareil mobile de télécommunication que le système 104 de contrôle cherche à suivre peut être déterminée par l'appareil mobile de télécommunication concerné qui envoi ensuite cette position au système 104 de contrôle.

Par « perdu » en parlant d'un appareil mobile de télécommunication, il est entendu que l'appareil mobile de télécommunication n'a pas indiqué sa présence ou sa position comme attendu, par exemple toutes les 8 secondes. Il est alors considéré que l'appareil mobile de télécommunication n'est plus présent dans le véhicule 100. Lorsque l'appareil mobile de télécommunication perdu est un moyen de démarrage du véhicule100, on indique préférentiellement à un utilisateur du véhicule 100, par exemple le conducteur, que le moyen de démarrage du véhicule 100 n'est plus présent dans le véhicule 100 : ainsi, l'utilisateur est informé qu'en cas d'arrêt du moteur, par exemple thermique, du véhicule 100, il ne pourra plus démarrer le véhicule 100.

Il résulte de ce qui a été décrit précédemment que ledit ensemble d'appareils 101, 102, 103 mobiles de télécommunication comporte un premier appareil 101 mobile de télécommunication et au moins un deuxième appareil 102 mobile de télécommunication. Le procédé de communication, dont un exemple non limitatif est illustré en figure 2, comporte une étape E1 d'émission d'un message par le système 104 de contrôle, le message indiquant que le système 104 de contrôle est dans un état de suivi de position et que cette position est celle du premier appareil 101 mobile de télécommunication. Ainsi, l'état de suivi de position du système 104 de contrôle permet un suivi de la position du premier appareil 101 mobile de télécommunication. La position suivie du premier appareil 101 mobile de télécommunication est de préférence sa position par rapport au véhicule 100. Le procédé de communication comporte aussi une étape E2 de réception et de traitement du message par le deuxième appareil 102 mobile de télécommunication d'où il résulte que le deuxième appareil 102 mobile de télécommunication restreint sa capacité de connexion au système 104 de contrôle ou s'interdit de se connecter au système 104 de contrôle. Ceci permet dans le cadre du procédé de communication de prioriser les connexions du premier appareil 101 mobile de télécommunication afin de limiter les connexions entrantes auprès du système 104 de contrôle pour améliorer la disponibilité du système 104 de contrôle à recevoir une connexion entrante initiée par le premier appareil 101 mobile de télécommunication dans le but de se signaler pour que le suivi de position puisse être réalisé par le véhicule 100 et plus particulièrement par le système 104 de contrôle. Autrement dit, le procédé de communication permet au premier appareil 101 mobile de télécommunication de rafraîchir sa position en diminuant la probabilité que se produise la situation problématique ou sans que la situation problématique ne se produise.

La restriction de capacité de connexion évoquée précédemment présente l'avantage de limiter que se produise la situation problématique, tout en permettant quand même certaines connexions d'un ou plusieurs appareils mobiles de télécommunication « non-suivis » par exemple en les autorisant à envoyer des commandes dite « utilisateur » pour activer des fonctions utilisateur du véhicule 100. Le ou les appareils mobiles de télécommunication non-suivis correspondent chacun à un deuxième appareil 102, 103 mobile de télécommunication.

L'interdiction de se connecter au système 104 de contrôle permet d'assurer que seul le premier appareil 101 mobile de télécommunication peut se connecter au système 104 de contrôle : la situation problématique ne devrait donc plus se produire.

En ce sens, la restriction de capacité de connexion et l'interdiction de se connecter au système 104 de contrôle décrites précédemment présentent un concept inventif commun permettant de limiter ou d'éviter que se produise un échec de connexion du premier appareil 101 communication au système 104 de contrôle selon la situation problématique.

Par exemple, le traitement du message, au cours de l'étape E2, par le deuxième appareil 102 mobile de télécommunication provoque la mise du deuxième appareil 102 mobile de télécommunication dans un état tel qu'il s'interdit de se connecter au système 104 de contrôle dans le but de lui communiquer sa position ou dans le but de seulement lui signifier sa présence. En effet, de telles connexions sont généralement nombreuses et augmentent le risque que se produise la situation problématique. Ainsi, le procédé de communication propose dans cet exemple de limiter le suivi de position au seul premier appareil 101 mobile de télécommunication dont les communications, c'est-à-dire les connexions au système 104 de contrôle, sont prioritaires dans le cadre du suivi de position.

Même si la capacité de connexion du deuxième appareil 102 mobile de télécommunication a été restreinte, il peut exister un besoin de satisfaire une ou plusieurs commandes utilisateur par exemple générées par un utilisateur du véhicule 100 en utilisant le deuxième appareil 102 mobile de communication pour mettre en oeuvre une ou plusieurs fonctions utilisateur telle que décrite ci-avant. Pour satisfaire ce besoin, le deuxième appareil 102 mobile de télécommunication ayant restreint sa capacité de connexion est autorisé à se connecter au système 104 de contrôle pour envoyer au système 104 de contrôle une ou des commandes utilisateur. Chaque commande utilisateur peut permettre l'activation d'une fonction utilisateur du véhicule 100 tel que décrite précédemment.

Selon une réalisation, le traitement du message par le deuxième appareil 102 mobile de télécommunication provoque la mise du deuxième appareil 102 mobile de télécommunication dans un état dans lequel le deuxième appareil 102 mobile de télécommunication s'interdit toute connexion au système 104 de contrôle. Ceci permet d'assurer que le deuxième appareil 102 mobile de télécommunication ne viendra pas empêcher la connexion du premier appareil 101 mobile de télécommunication.

Bien entendu, l'ensemble d'appareils 101, 102, 103 mobiles de télécommunication peut comporter une pluralité de deuxièmes appareils 102, 103 mobiles de télécommunication (par exemple au nombre de deux en figure 1). Dans ce cas, tout ce qui s'applique dans la présente description au deuxième appareil 102, 103 mobile de télécommunication peut s'appliquer à chacun des deuxièmes appareils 102, 103 mobiles de télécommunication. Par exemple, l'étape E2 de réception et de traitement du message est alors mise en oeuvre pour chacun des deuxièmes appareils 102, 103 mobiles de télécommunication.

Dans le but d'assurer un suivi de la position du premier appareil 101 mobile de télécommunication, le premier appareil 101 mobile de télécommunication peut se connecter (étape E3 en figure 2) au système 104 de contrôle à plusieurs reprises, de préférence à intervalles réguliers par exemple toutes les 8 secondes, pour permettre au véhicule 100, de préférence au système 104 de contrôle, d'assurer le suivi de la position du premier appareil 101 mobile de télécommunication. Ainsi, lorsque le système 104 de contrôle est dans l'état de suivi de position, le procédé de communication met en oeuvre une étape de suivi dans laquelle le système 104 de contrôle est en attente de connexions du premier appareil 101 mobile de télécommunication.

En particulier, le procédé de communication peut comporter une étape E4 de réception et de traitement du message (celui émis au cours de l'étape E1) par le premier appareil 101 mobile de télécommunication telle que le traitement du message par le premier appareil 101 mobile de télécommunication provoque la mise en oeuvre de la connexion à plusieurs reprises (étape E3) du premier appareil 101 mobile de télécommunication pour permettre au système 104 de contrôle d'assurer le suivi de la position du premier appareil 101 mobile de télécommunication.

Ces connexions à plusieurs reprises permettent efficacement au premier appareil 101 mobile de télécommunication soit d'envoyer sa position au système 104 de contrôle, soit simplement de signifier sa présence au système 104 de contrôle qui interprétera alors, dans le cadre de son suivi de la position, chacune de ces connexions signifiant la présence comme un positionnement adéquat du premier appareil 101 mobile de télécommunication par rapport au véhicule 100. Autrement dit, pour chaque connexion du premier appareil 101 mobile de télécommunication au système 104 de contrôle pour permettre au système 104 de contrôle d'assurer le suivi de la position du premier appareil 101 mobile de télécommunication, ledit premier appareil 101 mobile de télécommunication peut transmettre sa position par rapport au véhicule 100 ou peut signifier sa présence au système 104 de contrôle.

Afin d'informer de manière efficace le deuxième appareil 102, 103 mobile de télécommunication et, le cas échéant, le premier appareil 101 mobile de télécommunication qu'un suivi de position est en cours, le message peut comporter une donnée d'identification du premier appareil 101 mobile de télécommunication et une donnée indiquant que le système 104 de contrôle est dans l'état de suivi de position. Dès lors, à la réception du message, le deuxième appareil 102, 103 mobile de télécommunication peut traiter ce message (étape E2) en le décodant pour connaître l'état du système 104 de contrôle et en déduire à partir de la donnée d'identification contenue dans le message qu'il n'est pas l'appareil mobile de télécommunication dont la position est à suivre/suivie et qu'il doit donc adapter son fonctionnement à la manière décrite ci-avant en restreignant sa capacité de connexion, ou en s'interdisant de se connecter, au système 104 de contrôle. Par ailleurs, à la réception du message, le premier appareil 101 mobile de télécommunication peut traiter ce message (étape E4) en le décodant pour connaître l'état du système 104 de contrôle et en déduire via son identifiant correspondant à la donnée d'identification qu'il doit se connecter au système 104 de contrôle de manière adaptée pour la mise en oeuvre du suivi de son positionnement. Le système 104 de contrôle peut, par exemple, gérer jusqu'à quatre sessions d'appareils mobiles de télécommunication en simultané, c'est-à-dire que quatre appareils mobiles de télécommunication peuvent être authentifiés avec leurs propres droits auprès du système 104 de contrôle. Un appareil mobile de télécommunication authentifié est dit « appairé » au système 104 de contrôle. Ainsi, la donnée d'identification du premier appareil 101 mobile de télécommunication peut correspondre à une donnée identifiant l'un des appareils mobiles de télécommunication authentifié par le système 104 de contrôle.

De préférence, le message émis par l'étape E1 d'émission est du type à être reçu par tous les appareils mobiles de télécommunication de l'ensemble d'appareils mobiles de télécommunication (bien entendu à portée de communication du système 104 de contrôle) sans besoin de connexion au système 104 de contrôle. Ceci présente l'avantage d'informer les appareils mobiles de télécommunication et notamment chaque deuxième appareil 102, 103 mobile de télécommunication sans nécessiter de connexion point à point entre chacun de ces appareils de télécommunication et le système 104 de contrôle. Pour cela, le message peut être une trame dite « d'advertising » consommable par tous les appareils 101, 102, 103 mobiles de l'ensemble d'appareils mobiles environnants sans besoin de connexion pour interpréter l'état du système 104 de contrôle. Par « consommable », il est ici entendu que la trame peut être reçue et traitée. Dans le cadre de la trame d'advertising, cette dernière peut être une trame d'advertising du protocole de communication Bluetooth, notamment BLE, et peut être formatée, de préférence par le système 104 de contrôle, pour contenir la donnée d'identification du premier appareil 101 mobile de télécommunication et la donnée indiquant que le système 104 de contrôle est dans l'état de suivi de position. Cette trame d'advertising peut être chiffrée de telle façon que seuls les appareils 101, 102, 103 mobiles de télécommunication appairés au véhicule 100, c'est-à-dire de préférence authentifiés auprès du système 104 de contrôle, peuvent déchiffrer le contenu de cette trame d'advertising.

Il a été évoqué précédemment que le premier appareil 101 mobile de télécommunication pouvait transmettre sa position au système 104 de contrôle. Par exemple, avant de transmettre sa position au système 104 de contrôle, le premier appareil 101 mobile de télécommunication détermine sa position à partir d'une mesure de niveau RSSI (abréviation de « Received Signal Strength Indication » en langue anglaise) d'un signal, de préférence Bluetooth, émis par le système 104 de contrôle. Cette mesure peut varier de - 95dBm à -30 dBm environ et permet de connaître la proximité du premier appareil 101 mobile de télécommunication par exemple par rapport à une zone de démarrage du véhicule 100 en particulier située juste au-dessus du système 104 de contrôle, ou du calculateur du système 104 de contrôle, ayant émis le signal dont le niveau RSSI est mesuré. Par exemple, si le niveau RSSI du signal considéré est strictement inférieur à un seuil par exemple de - 45dBm (ce seuil pouvant être adapté en fonction des caractéristiques du véhicule 100 et du premier appareil 101 mobile de télécommunication), on en déduit que le premier appareil 101 mobile de télécommunication est toujours positionné dans la zone de démarrage et donc que le premier appareil 101 mobile de télécommunication n'est pas « perdu », au contraire, si le niveau RSSI du signal considéré est supérieur ou égal à ce seuil, il faut en avertir l'utilisateur du véhicule 100 pour éviter qu'il se retrouve dans une situation où il ne pourra plus démarrer le véhicule 100.

De préférence, parmi les différents appareils mobiles de télécommunication ayant reçu le message, seul celui dont la position est suivie pourra se connecter, par exemple à intervalles réguliers, pour indiquer au système 104 de contrôle qu'il est présent dans le véhicule 100 en lui communicant sa position, et les autres appareils mobiles de télécommunication ne communiqueront pas, ou plus, leur position. Il en résulte que le procédé de communication décrit présente l'avantage de limiter le nombre de connexions des appareils mobiles de télécommunication au système 104 de contrôle lorsque la position de l'un d'entre eux est suivie.

Il résulte de ce qui a été décrit précédemment que le procédé de communication peut avantageusement être mis en oeuvre au sein d'un procédé de fonctionnement du véhicule 100 dans lequel il est cherché à savoir quand un appareil mobile de télécommunication, dont la position est suivie, est « perdu » par exemple afin d'activer une fonction particulière, par exemple de sécurité, indiquant la perte de l'appareil mobile de télécommunication suivi afin d'en informer un utilisateur du véhicule 100 comme le conducteur du véhicule 100.

Notamment, tout ce qui a été décrit en relation avec le procédé de communication peut faire partie du procédé de fonctionnement du véhicule 100.

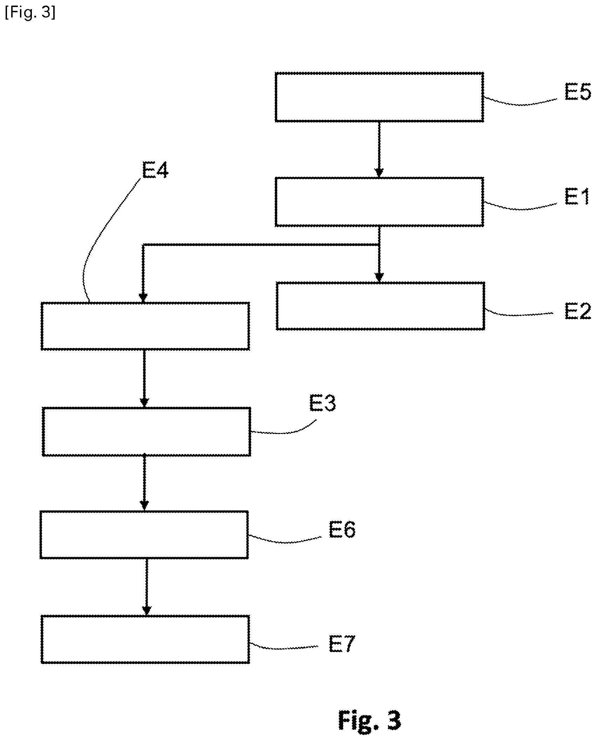

En ce sens, l'invention est aussi relative au procédé de fonctionnement du véhicule 100 dont le système 104 de contrôle est apte à communiquer avec l'ensemble d'appareils mobiles de télécommunication. Un exemple non limitatif d'un tel procédé de fonctionnement est illustré en figure 3. Le procédé de fonctionnement comporte l'étape E1 d'émission et l'étape E2 de réception et de traitement du message par le deuxième appareil 102 mobile de télécommunication. Au préalable de l'étape E1 d'émission du message, le procédé de fonctionnement comporte une étape E5 d'activation d'une fonction du véhicule 100 sur requête/commande du premier appareil 101 mobile de télécommunication, l'étape E5 d'activation provoquant l'activation de l'état de suivi de position puis la mise en oeuvre de l'étape E1 d'émission. L'étape E5 d'activation permet de déterminer lequel des appareils mobiles de télécommunication est le premier appareil 101 mobile de télécommunication. Un tel procédé de fonctionnement permet de mettre en oeuvre le procédé de communication décrit et d'exploiter le suivi de la position du premier appareil 101 mobile de communication par le système 104 de contrôle par exemple en vue d'assurer une fonction du véhicule 100, tel qu'une fonction d'avertissement, en cas de perte du premier appareil 101 mobile de télécommunication.

Selon un mode de réalisation particulier, il existe une application pour laquelle le suivi de la position du premier appareil 101 mobile de télécommunication est tout particulièrement adaptée. Dans cette application, le premier appareil 101 mobile de télécommunication a servi pour démarrer le véhicule 100 et il est important de notifier à l'utilisateur du véhicule 100, tel que le conducteur, lorsqu'une disparition du premier appareil 101 mobile est détectée. Ceci permet d'informer l'utilisateur de la perte du moyen de démarrage du véhicule 100 correspondant au premier appareil 101 mobile de télécommunication afin d'éviter qu'il ne s'aperçoive de cette perte qu'après avoir roulé une longue distance, par exemple de 300 km. Dans ce cas, le premier appareil 101 mobile est aussi appelé identifiant du véhicule 100. Selon ce mode de réalisation particulier, la fonction activée est une fonction de démarrage du véhicule 100. Le premier appareil 101 mobile de télécommunication se connecte (étape E3), de préférence après avoir reçu et traité (étape E4) le message émis par l'étape E1 d'émission, au système 104 de contrôle à plusieurs reprises, par exemple toutes les 8 secondes, pour permettre au système 104 de contrôle d'assurer le suivi de la position du premier appareil 101 mobile de télécommunication. Le système 104 de contrôle détecte (étape E6 sur la figure 3) une perte du premier appareil 101 mobile de télécommunication causée par une absence de connexion du premier appareil 101 mobile de télécommunication attendue par le système 104 de contrôle pour assurer le suivi de la position du premier appareil 101 mobile de télécommunication. Le procédé de fonctionnement comporte une étape E7 d'émission (figure 3) d'un avertissement déclenchée par la détection de la perte du premier appareil 101 mobile de télécommunication de préférence alors que le véhicule 100 est moteur tournant. L'avertissement peut être diffusé de manière sonore ou sur un combiné, aussi appelé tableau de bord, du véhicule 100 de préférence par requête du système 104 de contrôle, pour être perçu par l'utilisateur du véhicule 100 et donc indiquer à l'utilisateur que le premier appareil 101 mobile de télécommunication n'est plus présent dans le véhicule 100 risquant ainsi de rendre impossible un futur démarrage du véhicule 100.

Il est à présent décrit un exemple particulier du procédé de fonctionnement. Selon cet exemple, les appareils 101, 102, 103 mobiles de télécommunication sont, de préférence, configurés pour activer une ou plusieurs fonctions du véhicule 100. Les droits de chaque appareil 101, 102, 103 mobile de télécommunication peuvent être différents de sorte à restreindre les fonctions du véhicule 100 activables pour chacun des appareils mobiles de télécommunication. Selon cet exemple particulier, le démarrage du véhicule 100 est réalisé en déposant un des appareils mobiles de télécommunication dans une zone restreinte dans le véhicule 100 (correspondant par exemple à la zone de démarrage évoquée ci-avant) d'où il résulte que cet appareil mobile de télécommunication devient le premier appareil 101 mobile de télécommunication. Lorsque le véhicule 100 est démarré, il est nécessaire de connaître la présence ou non du premier appareil 101 mobile de télécommunication ayant servi pour le démarrage afin d'avertir l'utilisateur du véhicule 100 si une disparition est détectée. Pour cela, il est diffusé, dans une trame d'advertising envoyée par le système 104 de contrôle, la présence du premier appareil 101 mobile de télécommunication suivi avec le numéro de session de ce premier appareil 101 mobile de télécommunication correspondant par exemple à la donnée d'identification décrite ci-avant du premier appareil 101 mobile de télécommunication authentifié auprès du système 104 de contrôle. Ainsi, le premier appareil 101 mobile de télécommunication recevant cette trame se connectera toutes les 8s pour indiquer au système 104 de contrôle qu'il est présent dans le véhicule 100 et les autres appareils mobiles de télécommunication (les deuxièmes appareils 102, 103 mobile de télécommunication) recevant cette trame ne communiqueront pas leur position au système 104 de contrôle. Moteur tournant, si le véhicule 100 ne reçoit plus d'information du premier appareil 101 mobile de télécommunication qui a permis le démarrage, alors un signal d'avertissement, indiquant la perte du premier appareil 101 mobile de télécommunication, sera envoyé via le combiné à l'utilisateur. Autrement dit, si une disparition est détectée, l'utilisateur va être averti, via un message diffusé au combiné de son véhicule, que son moyen de démarrage n'est plus présent dans le véhicule 100.

En ce sens, l'invention et aussi relative à un véhicule 100, de préférence un véhicule 100 automobile, comportant le système 104 de contrôle configuré pour la mise en oeuvre du procédé de communication entre le système 104 de contrôle et l'ensemble d'appareils mobiles, ou configuré pour la mise en oeuvre du procédé de fonctionnement.

Le procédé de communication et le procédé de fonctionnement du véhicule présentent chacun une application industrielle dans le domaine des véhicules de préférence automobiles et permettent d'introduire de nouvelles fonctionnalités au véhicule 100 tel qu'un démarrage du véhicule 100 avec un appareil 101 mobile de télécommunication.

## Revendications

1. Procédé de communication entre un système (104) de contrôle d'un véhicule (100) et un ensemble d'appareils (101, 102, 103) mobiles de télécommunication, ledit ensemble d'appareils (101, 102, 103) mobiles de télécommunication comportant un premier appareil (101) mobile de télécommunication et au moins un deuxième appareil (102) mobile de télécommunication, le procédé de communication comportant une étape (E1) d'émission d'un message par le système (104) de contrôle, **caractérisé en ce que** le message indique que le système (104) de contrôle est dans un état de suivi de position, par rapport au véhicule (100), et que cette position est celle du premier appareil (101) mobile de télécommunication, et **en ce que** le procédé de communication comporte une étape (E2) de réception et de traitement du message par le deuxième appareil (102) mobile de télécommunication d'où il résulte que le deuxième appareil (102) mobile de télécommunication restreint sa capacité de connexion au système (104) de contrôle ou s'interdit de se connecter au système (104) de contrôle.

2. Procédé de communication selon la revendication 1, **caractérisé en ce que** le traitement du message par le deuxième appareil (102) mobile de télécommunication provoque la mise du deuxième appareil (102) mobile de télécommunication dans un état tel qu'il s'interdit de se connecter au système (104) de contrôle dans le but de lui communiquer sa position ou dans le but de seulement lui signifier sa présence, et/ou **en ce que** le deuxième appareil (102) mobile de télécommunication ayant restreint sa capacité de connexion est autorisé à se connecter au système (104) de contrôle pour envoyer au système (104) de contrôle une ou des commandes utilisateur, choisie parmi : une activation du klaxon du véhicule (100), une ouverture ou une fermeture séquentielle des vitres du véhicule (100), une ouverture ou une fermeture du coffre motorisé du véhicule (100), une ouverture ou une fermeture de portes latérales coulissantes motorisées du véhicule (100), une activation des clignotants du véhicule (100), une activation des projecteurs du véhicule (100).

3. Procédé de communication selon la revendication 1, **caractérisé en ce que** le traitement du message par le deuxième appareil (102) mobile de télécommunication provoque la mise du deuxième appareil (102) mobile de télécommunication dans un état dans lequel il s'interdit toute connexion au système (104) de contrôle.

4. Procédé de communication selon l'une quelconque des revendications précédentes, **caractérisé en ce que** le premier appareil (101) mobile de télécommunication se connecte (E3) au système (104) de contrôle à plusieurs reprises, par exemple toutes les 8 secondes, pour permettre au système (104) de contrôle d'assurer le suivi de la position du premier appareil (101) mobile de télécommunication.

5. Procédé de communication selon la revendication 4, **caractérisé en ce que**, pour chaque connexion du premier appareil (101) mobile de télécommunication au système (104) de contrôle pour permettre au système (104) de contrôle d'assurer le suivi de la position du premier appareil (101) mobile de télécommunication, ledit premier appareil (101) mobile de télécommunication transmet sa position par rapport au véhicule (100) ou signifie sa présence au système (104) de contrôle.

6. Procédé de communication selon l'une quelconque des revendications précédentes, **caractérisé en ce que** le message comporte une donnée d'identification du premier appareil (101) mobile de télécommunication et une donnée indiquant que le système (104) de contrôle est dans l'état de suivi de position.

7. Procédé de communication selon l'une quelconque des revendications 1 à 6, **caractérisé en ce que** le message émis est du type à être reçu par tous les appareils mobiles de télécommunication de l'ensemble d'appareils mobiles de télécommunication sans besoin de connexion au système (104) de contrôle.

8. Procédé de fonctionnement d'un véhicule (100) comportant un système (104) de contrôle apte à communiquer avec un ensemble d'appareils mobiles de télécommunication, ledit ensemble d'appareils (101, 102, 103) mobiles de télécommunication comportant un premier appareil (101) mobile de télécommunication et au moins un deuxième appareil (102) mobile de télécommunication, le procédé de fonctionnement comportant une étape (E1) d'émission d'un message par le système (104) de contrôle,
**caractérisé en ce que** :
- le message indique que le système (104) de contrôle est dans un état de suivi de position, par rapport au véhicule (100), et que cette position est celle du premier appareil (101) mobile de télécommunication,
- le procédé de fonctionnement comporte une étape (E2) de réception et de traitement du message par le deuxième appareil (102) mobile de télécommunication d'où il résulte que le deuxième appareil (102) mobile de télécommunication restreint sa capacité de connexion au système (104) de contrôle ou s'interdit de se connecter au système (104) de contrôle,
- au préalable de l'étape (E1) d'émission du message, le procédé de fonctionnement comporte une étape (E5) d'activation d'une fonction du véhicule (100) sur requête du premier appareil (101) mobile de télécommunication, l'étape (E5) d'activation provoquant l'activation de l'état de suivi de position puis la mise en oeuvre de l'étape (E1) d'émission.

9. Procédé de fonctionnement selon la revendication précédente, **caractérisé en ce que** :
- la fonction activée est une fonction de démarrage du véhicule (100),
- le premier appareil (101) mobile de télécommunication se connecte au système (104) de contrôle à plusieurs reprises, par exemple toutes les 8 secondes, pour permettre au système (104) de contrôle d'assurer le suivi de la position du premier appareil (101) mobile de télécommunication,
- le système (104) de contrôle détecte (E6) une perte du premier appareil (101) mobile de télécommunication causée par une absence de connexion du premier appareil (101) mobile de télécommunication attendue par le système (104) de contrôle pour assurer le suivi de la position du premier appareil (101) mobile de télécommunication,
- le procédé de fonctionnement comporte une étape (E7) d'émission d'un avertissement déclenchée par la détection de la perte du premier appareil (101) mobile de télécommunication.

10. Véhicule (100), de préférence automobile, **caractérisé en ce qu'**il comporte un système (104) de contrôle configuré pour :
- la mise en oeuvre du procédé de communication entre le système (104) de contrôle et un ensemble d'appareils mobiles de télécommunication selon l'une quelconque des revendications 1 à 7, ou
- la mise en oeuvre du procédé de fonctionnement selon l'une quelconque des revendications 8 à 9.

## Patentansprüche

1. Verfahren zur Kommunikation zwischen einem System (104) zur Steuerung eines Fahrzeugs (100) und einer Gruppe mobiler Telekommunikationsgeräte (101, 102, 103), wobei die Gruppe mobiler Telekommunikationsgeräte (101, 102, 103) ein erstes mobiles Telekommunikationsgerät umfasst (101) und mindestens einem zweiten mobilen Telekommunikationsgerät (102), wobei das Kommunikationsverfahren einen Schritt (E1) des Sendens einer Nachricht durch das Steuersystem (104) umfasst, **dadurch gekennzeichnet, dass** die Nachricht angibt, dass das Steuersystem (104) sich in einem Positionsverfolgungszustand relativ zum Fahrzeug (100) befindet und dass diese Position die des ersten mobilen Telekommunikationsgeräts (101) ist, und dass das Kommunikationsverfahren einen Schritt (E2) des Empfangs und der Verarbeitung der Nachricht umfasst durch das zweite mobile Telekommunikationsgerät (102), was dazu führt, dass das zweite mobile Telekommunikationsgerät (102) seine Verbindungskapazität zum Steuerungssystem (104) einschränkt. oder verbietet sich selbst die Verbindung zum Leitsystem (104).

2. Kommunikationsverfahren nach Anspruch 1, **dadurch gekennzeichnet, dass** die Verarbeitung der Nachricht durch das zweite mobile Telekommunikationsgerät (102) dazu führt, dass das zweite mobile Telekommunikationsgerät (102) in einen Zustand versetzt wird, in dem es keine Verbindung zum Steuerungssystem herstellen kann (104) um ihm seine Position mitzuteilen oder ihm lediglich seine Anwesenheit mitzuteilen, und/oder dass das zweite mobile Telekommunikationsgerät (102), das seine Verbindungskapazität eingeschränkt hat, berechtigt ist, sich mit der Systemsteuerung (104) zu verbinden um einen oder mehrere Benutzerbefehle an das Steuersystem (104) zu senden, ausgewählt aus: Aktivierung der Fahrzeughupe (100), sequentielles Öffnen oder Schließen der Fahrzeugfenster (100), Öffnen oder Schließen des motorisierten Kofferraums des Fahrzeugs ( 100), Öffnen oder Schließen motorisierter seitlicher Schiebetüren des Fahrzeugs (100), Aktivierung der Blinker des Fahrzeugs (100), Aktivierung der Scheinwerfer des Fahrzeugs (100).

3. Kommunikationsverfahren nach Anspruch 1, **dadurch gekennzeichnet, dass** die Verarbeitung der Nachricht durch das zweite mobile Telekommunikationsgerät (102) dazu führt, dass das zweite mobile Telekommunikationsgerät (102) in einen Zustand versetzt wird, in dem ihm jegliche Verbindung zur Steuerung untersagt ist System (104).

4. Kommunikationsverfahren nach einem der vorhergehenden Ansprüche, **dadurch gekennzeichnet, dass** sich das erste mobile Telekommunikationsgerät (101) mehrmals, beispielsweise alle 8 Sekunden, mit dem Steuersystem (104) verbindet (E3), damit das Steuersystem (104) ) zur Überwachung der Position des ersten mobilen Telekommunikationsgeräts (101).

5. Kommunikationsverfahren nach Anspruch 4, **dadurch gekennzeichnet, dass** für jede Verbindung des ersten mobilen Telekommunikationsgeräts (101) mit dem Steuerungssystem (104) dem Steuerungssystem (104) ermöglicht wird, die Position des ersten mobilen Telekommunikationsgeräts (101) zu überwachen ) übermittelt das erste mobile Telekommunikationsgerät (101) seine Position relativ zum Fahrzeug (100) oder meldet seine Anwesenheit an das Steuerungssystem (104).

6. Kommunikationsverfahren nach einem der vorhergehenden Ansprüche, **dadurch gekennzeichnet, dass** die Nachricht Identifikationsdaten des ersten mobilen Telekommunikationsgeräts (101) und Daten enthält, die angeben, dass sich das Steuerungssystem (104) im Zustand Positionsverfolgung befindet.

7. Kommunikationsverfahren nach einem der Ansprüche 1 bis 6, **dadurch gekennzeichnet, dass** die übermittelte Nachricht von der Art ist, dass sie von allen mobilen Telekommunikationsgeräten der Gruppe mobiler Telekommunikationsgeräte empfangen werden kann, ohne dass eine Verbindung zum Steuerungssystem (104) erforderlich ist.

8. Verfahren zum Betreiben eines Fahrzeugs (100), das ein Steuersystem (104) umfasst, das mit einer Gruppe mobiler Telekommunikationsgeräte kommunizieren kann, wobei die Gruppe mobiler Telekommunikationsgeräte (101, 102, 103) ein erstes Gerät (101) und ein mobiles Telekommunikationsgerät umfasst mindestens ein zweites mobiles Telekommunikationsgerät (102), wobei das Betriebsverfahren einen Schritt (E1) des Sendens einer Nachricht durch das Steuersystem (104) umfasst, **dadurch gekennzeichnet, dass**:
- die Nachricht angibt, dass sich das Steuersystem (104) in einem befindet Positionsverfolgungszustand, relativ zum Fahrzeug (100), und dass diese Position die des ersten mobilen Telekommunikationsgeräts (101) ist,
- das Betriebsverfahren einen Schritt (E2) des Empfangs und der Verarbeitung der Nachricht durch das zweite mobile Telekommunikationsgerät umfasst Gerät (102), aus dem sich ergibt, dass das zweite mobile Telekommunikationsgerät (102) seine Verbindungskapazität zum Steuerungssystem (104) einschränkt oder ihm die Verbindung zum Steuerungssystem (104) untersagt wird,
- vor dem Schritt (E1) von Senden der Nachricht, wobei das Betriebsverfahren einen Schritt (E5) des Aktivierens einer Funktion des Fahrzeugs (100) auf Anfrage des ersten mobilen Telekommunikationsgeräts (101) umfasst, wobei der Aktivierungsschritt (E5) die Aktivierung des Positionsverfolgungszustands bewirkt dann die Durchführung des Schritts (E1) der Emission.

9. Betriebsverfahren nach dem vorhergehenden Anspruch, **dadurch gekennzeichnet, dass**:
- die aktivierte Funktion eine Startfunktion des Fahrzeugs (100) ist,
- das erste mobile Telekommunikationsgerät (101) mehrmals, beispielsweise alle, eine Verbindung zum Steuersystem (104) herstellt 8 Sekunden, damit das Kontrollsystem (104) die Position des ersten mobilen Telekommunikationsgeräts (101) überwachen kann,
- das Kontrollsystem (104) einen durch einen Mangel verursachten Verlust des ersten mobilen Telekommunikationsgeräts (101) erkennt (E6). des Anschließens des ersten mobilen Telekommunikationsgeräts (101) durch das Steuerungssystem (104) zur Überwachung der Position des ersten mobilen Telekommunikationsgeräts (101),
- das Betriebsverfahren umfasst einen Schritt (E7) des Ausgebens einer durch das Steuerungssystem (104) ausgelösten Warnung Erkennen des Verlusts des ersten mobilen Telekommunikationsgeräts (101).

10. Fahrzeug (100), vorzugsweise Automobil, **dadurch gekennzeichnet, dass** es ein Steuersystem (104) umfasst, das für Folgendes konfiguriert ist:
- die Implementierung des Kommunikationsverfahrens zwischen dem Steuersystem (104) und einer Reihe mobiler Telekommunikationsgeräte nach einem der Ansprüche 1 bis 7, oder
- die Durchführung des Betriebsverfahrens nach einem der Ansprüche 8 bis 9.

## Claims

1. Method of communication between a system (104) for controlling a vehicle (100) and a set of mobile telecommunications devices (101, 102, 103), said set of mobile telecommunications devices (101, 102, 103) comprising a first mobile telecommunications device (101) and at least one second mobile telecommunications device (102), the communication method comprising a step (E1) of transmitting a message by the control system (104), **characterized in that** the message indicates that the control system (104) is in a position tracking state, relative to the vehicle (100), and that this position is that of the first mobile telecommunications device (101), and **in that** the communication method comprises a step (E2) of reception and processing of the message by the second mobile telecommunications device (102) which results in the second mobile telecommunications device (102) restricting its connection capacity to the control system (104) or prohibits himself from connecting to the control system (104).

2. Communication method according to claim 1, **characterized in that** the processing of the message by the second mobile telecommunications device (102) causes the second mobile telecommunications device (102) to be placed in a state such that it is prohibited from connect to the control system (104) for the purpose of communicating to him his position or for the purpose of only notifying him of his presence, and/or **in that** the second mobile telecommunications device (102) having restricted its connection capacity is authorized to connect to the system (104) control to send to the control system (104) one or more user commands, chosen from: activation of the vehicle horn (100), sequential opening or closing of the vehicle windows (100), opening or closing of the motorized trunk of the vehicle (100), opening or closing of motorized sliding side doors of the vehicle (100), activation of the vehicle's turn signals (100), activation of the vehicle's headlights (100).

3. Communication method according to claim 1, **characterized in that** the processing of the message by the second mobile telecommunications device (102) causes the second mobile telecommunications device (102) to be placed in a state in which it is prohibited from any connection to the control system (104).

4. Communication method according to any one of the preceding claims, **characterized in that** the first mobile telecommunications device (101) connects (E3) to the control system (104) several times, for example every 8 seconds, to allow for the control system (104) to monitor the position of the first mobile telecommunications device (101).

5. Communication method according to claim 4, **characterized in that**, for each connection of the first mobile telecommunications device (101) to the control system (104) to allow the control system (104) to monitor the position of the first mobile telecommunications device (101), said first mobile telecommunications device (101) transmits its position relative to the vehicle (100) or signifies its presence to the control system (104).

6. Communication method according to any one of the preceding claims, **characterized in that** the message includes identification data of the first mobile telecommunications device (101) and data indicating that the control system (104) is in the state position tracking.

7. Communication method according to any one of claims 1 to 6, **characterized in that** the message transmitted is of the type to be received by all the mobile telecommunications devices of the set of mobile telecommunications devices without the need for connection to the system (104) control.

8. Method of operating a vehicle (100) comprising a control system (104) capable of communicating with a set of mobile telecommunications devices, said set of mobile telecommunications devices (101, 102, 103) comprising a first device (101) mobile telecommunications device and at least one second mobile telecommunications device (102), the operating method comprising a step (E1) of transmitting a message by the control system (104), **characterized in that**:
- the message indicates that the control system (104) is in a position tracking state, relative to the vehicle (100), and that this position is that of the first mobile telecommunications device (101),
- the operating method comprises a step (E2) of reception and processing of the message by the second mobile telecommunications device (102) from which it results that the second mobile telecommunications device (102) restricts its connection capacity to the control system (104) or is prohibited from connecting to the control system (104),
- prior to the step (E1) of sending the message, the operating method comprises a step (E5) of activating a function of the vehicle (100) at the request of the first mobile telecommunications device (101), the activation step (E5) causing the activation of the position tracking state then the implementation of the step (E1) of emission.

9. Operating method according to the preceding claim, **characterized in that**:
- the activated function is a starting function of the vehicle (100),
- the first mobile telecommunications device (101) connects to the control system (104) several times , for example every 8 seconds, to allow the control system (104) to monitor the position of the first mobile telecommunications device (101),
- the control system (104) detects (E6) a loss of first mobile telecommunications device (101) caused by a lack of connection of the first mobile telecommunications device (101) expected by the control system (104) to monitor the position of the first mobile telecommunications device (101),
- the operating method comprises a step (E7) of issuing a warning triggered by the detection of the loss of the first mobile telecommunications device (101).

10. Vehicle (100), preferably automobile, **characterized in that** it comprises a control system (104) configured for:
- the implementation of the communication method between the control system (104) and a set of mobile devices telecommunications according to any one of claims 1 to 7, or
- the implementation of the operating method according to any one of claims 8 to 9.
